# EUROPEAN PATENT APPLICATION

(11) **EP 2 015 569 A1**
(43) Date of publication of application: **14.01.2009**
(21) Application number: 06746031.1
(22) Date of filing: 02.05.2006
(51) Int. Cl.: H04N 5/268

(54) **VIDEO SIGNAL SWITCHING SYSTEM**

(71) Applicant: Media Global Links Co., Ltd., Kawasaki-shi, Kanagawa 213-0012 (JP)
(72) Inventor: NAKAMURA, Kazunori, Kawasaki-shi, Kanagawa 213-0012 (JP); KINOSHITA, Osamu, Kawasaki-shi, Kanagawa 213-0012 (JP); SUGAWARA, Tsukasa, Kawasaki-shi, Kanagawa 213-0012 (JP); SUZUKI, Takashi, Kawasaki-shi, Kanagawa 213-0012 (JP)
(74) Representative: Betten & Resch
(86) International application number: PCT/JP2006/309181
(87) International publication number: WO 2007/129397

(57) **Abstract**

A video signal switching system wherein existing network components and the like are used to perform a switching process, thereby reducing the costs and improving the versatility as well. As a solution, a video signal switching system is provided which comprises a plurality of input port components that acquire non-packet digital consecutive signals; a plurality of output port components that output the non-packet digital consecutive signals; a packetizing unit that packetized the acquired non-packet digital consecutive signals into packets after associating them with the input port identification information of the input port components having acquired them; a switch unit that distributes the packets to the output port components in accordance with the input port identification information associated with those packets; and a restoring unit that restores the packet signals distributed by the switch unit to the non-packet digital consecutive signals.

## Description

### BACKGROUND OF THE INVENTION

### Field of the Invention

This invention pertains to a video signal switching system.

### Description of the Related Art

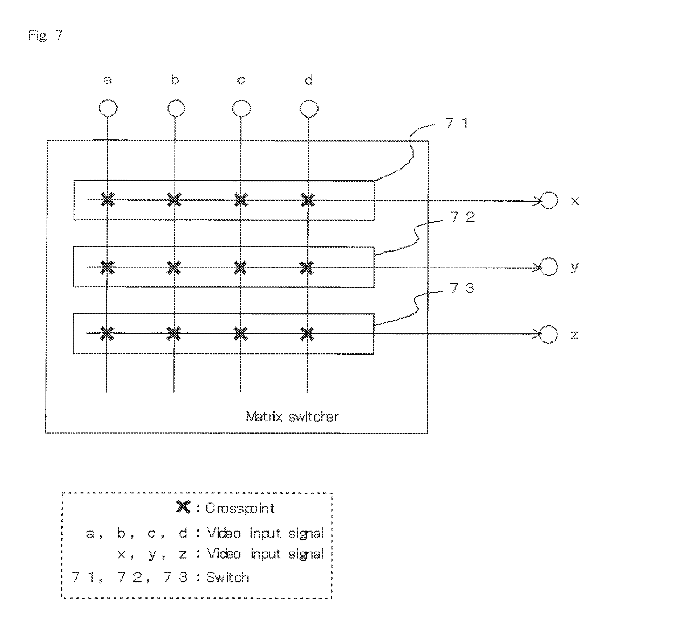

In the prior art, when switching a non-packet signal such as a television video signal, the switching of video signal is carried out by means of a video switcher. As an example, a matrix-type video switcher as disclosed in Unexamined Japanese Patent Application Publication No. 2005-33511 is utilized. Fig. 7 is a diagram showing an example of a prior art video switch. In Fig. 7, video input signals to be inputted, a, b, c and d, are switched to video output signals x, y. and z, by switches 71, 72, and 73. The lines of the input signals intersect with the line of the output signals at cross-points, and switching is carried out by the switches 71, 72, and 73 to carry out switching of video input signals to video output signals.

As in the conventional technology, in cases where the switching of video signal is carried out by means of physical switching by electrical and mechanical control, the following problems exist, At the outset, in cases where switching of a large number of signal lines such as HD-SD1 (High Definition Serial Digital Interface) or SD (Standard Definition)-SDI, the number of video boards utilized for input/output of the video signal increases, thereby enlarging its case, or processing load of the switching increases due to the switching of the large number of signals. Additionally, the video switch is a device dedicated only to the switching of the video signals, and lacks versatility.
It is an objective of the present invention to provide a video signal switching system, which performs switching by utilizing the existing network components, thereby reducing cost and improving versatility.

### SUMMARY OF THE INVENTION

In order to solve the above deficiency, the present invention provides a video signal switching system, comprising a plurality of input ports for acquiring non-packet serial digital signal; a plurality of output ports for outputting said non-packet serial digital signal; a packetization unit which packetizes the acquired non-packet serial digital signal after being correlated with input port identification information of the input port, which has acquired the non-packet serial digital signal, thereby generating a packet; a switching unit which sorts the packetized packet to the output port in accordance with the input port identification information correlated with the packet; and a restoration unit which restores the packet sorted by the switching unit to the non-packet serial digital signal.
This video switching system may comprise a control unit, which carries out integral management of the input port identification information, of the output port identification information, and of control information of input/output switching.

According to the video switching system of the present invention, when the non-packet serial digital signal such as video signal is inputted, the non-packet signal is packetized. The switching is carried out for the packetized signal, so that it is possible to carry out the switching process by utilizing existing network components. Therefore, it is possible to significantly reduce cost. Moreover, when the output port is fixed after the switching, the packet is restored to the original non-packet signal, and is outputted. Accordingly, the non-packet signal is used for the input and the output, thereby enabling efficient switching, which has been difficult in the prior art. Furthermore, it is possible to easily connect to other TCP/IP network by packetizing, thereby improving versatility.

### BRIEF DESCRIPTION OF THE DRAWINGS

Fig. 1 is a functional block diagram of an embodiment.
Fig. 2 is a diagram showing a configuration of a packet.
Fig. 3 is a diagram showing an example of switching through multicasting.
Fig. 4 is a flowchart of the embodiment.
Fig. 5 is a diagram showing a concrete configuration of a switching unit.
Fig. 6 is a diagram showing an extended example of the embodiment.
Fig. 7 is a diagram showing an example of a prior art video switch.

### DETAILED DESCRIPTION OF THE PREFERRED EMBODIMENT

Embodiments of the present invention will be described hereinbelow. The present invention is not to be limited to the above embodiments and able to be embodied in various forms without departing from the scope thereof.

This embodiment relates to the video signal switching system. In an aspect of the present invention, video signal as the non-packet signal is packetized, and switching is carried out, and the output is carried out after the packetized signal, is restored to the non-packet signal. This packetizing enables an establishment of the switching system by utilizing the existing network components, thereby reducing cost. Moreover, the packetizing enables, for example, output of the same video to a plurality of arbitrary output ports by utilizing multicasting, or mutual connection with another network.

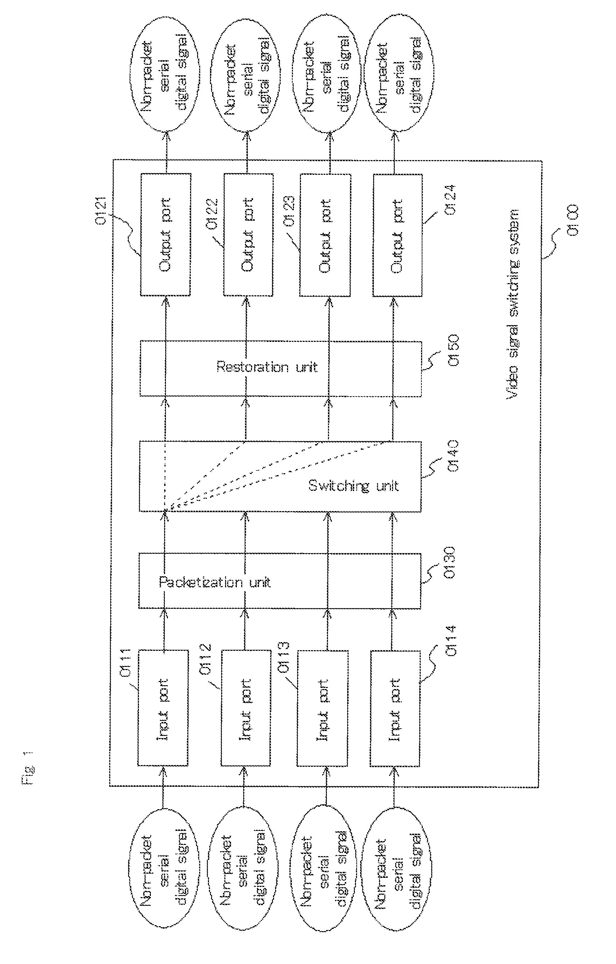

Fig. 1 is a functional block diagram of an embodiment. The video signal switching system 0100 of the embodiment as shown in Fig. 1 comprises a plurality of 'input ports' 011 1-0114. a plurality of output ports' 0121-0124, a 'packetization unit' 0130, a 'switching unit' 0140. and a 'restoration unit' 0150.
The video signal switching system 0100 is a system corresponding to the video switch for switching video signals as described in the related art. Therefore, the video signal switching, system can be configured as a video signal switching apparatus comprising the hollowing components. Alternatively, it can be configured as the video signal switching system, in which the hollowing components exist as independent apparatuses, and are integrated.

The plurality of input ports 0111-0114 acquire a non-packet serial digital signal. The term 'non-packet serial digital signal' is a serial digital signal, which is not packetized as described below, The term serial digital signal' is serial digital signal such as HD-SDI or SD-SDI.
The plurality of input ports are provided. In Fig. 1, four input ports are indicated, but its number may be more or less than this. Moreover, the input port may be singular. This input port is an input interface for the non-packet serial digital signal, and input port identification information is given to each input port. The input port identification information is information utilized upon packetizing in the after-mentioned packetization unit 0130. An example of the input port includes a connector of a coaxial cable.

The plurality of output ports 0121-0124 are for outputting said non-packet serial digital signal. The 'non-packet serial digital signal' corresponds to non-packet serial digital signal, which has been inputted at any one of the plurality of input ports. As to the output port, in Fig. 1, four output ports are indicated, and its number may be more or less than this, Moreover, the output port may be singular. The output port outputs the non-packet serial digital signal to an apparatus in a station. An example of the output port includes a connector of a coaxial cable similar to the input port. From the output port, the non-packet serial digital signal, which has been inputted at any one of the plurality of input ports, is outputted as an original non-packet signal through the after-mentioned packetizing and restoration process.

The packetization unit 0130 packetizes the acquired non-packet serial digital signal after being correlated with input port identification information of the input port, which has acquired the non-packet serial digital signal, thereby generating a packet. The term 'acquired non-packet serial digital signal' corresponds to the non-packet serial digital signal acquired by the input port. The term 'input port identification information' corresponds to information for identifying the input port, which has acquired the non-packet serial digital signal, For example, the input port identification information may be serial numerals such as input port 1, input port 2... for connectors of coaxial cables in the order of position from top to bottom of a case. Additionally, the input port identification information may be expressed by a format of IP address such as '192.168,1.1'. Additionally, it may be expressed by a MAC (Media Access Control) address format such as '00-90-99-32-BA-FF'. An example of a method for acquiring the input port identification information includes a method, in which if the input port can be uniquely identified in the packetization unit, the packetization unit generates the input port identification information and carries out acquisition depending on from which input port (connector) the non-packet signal has been inputted. Additionally, the input port may add the input port identification information to the head portion of the non-packet signal to be outputted to the packetization unit, and the packetization unit may acquire the input port identification information.
In an aspect of the present invention, the non-packet serial digital signal is packetized after correlating with the input port identification information. The term 'packetize' means that non-packet serial digital signal is divided into small blocks of data named 'packet'. The packet is configured by data portion and header information such as an address of a destination. The term 'packetized after correlating with the input port identification information' mean that, for example, the input port identification information is stored as a destination IP address included in the header information of the packet. Thus, the input port identification information is stored as the destination IP address, so that it is possible to distribute the non-packet signal inputted to a predetermined input port to a predetermined output port. Detailed description will be provided with reference to concrete examples. Note that, although a case where the input port identification information is stored as 'a destination IP address' is described below, the input port identification information may be stored as 'source IP address'. Alternatively, the input port identification information may be stored as a destination MAC address or as a source MAC. address at the layer-2 level,

The switching unit 0140 sorts the packetized packet to the output port in accordance with the input port identification information correlated with the packet. The term 'sorts the packetized packet to the output port in accordance with the input port identification information' mean to output the packet to the output port corresponding to its input port identification information with reference to the input port identification information correlated with the packet inputted from the packetizalion unit. For example, the packet can pass through only the switching port, to which the output port corresponding to the destination IP address stored as the input port identification information is connected. Therefore, the packet is sorted to the output port in accordance with input port identification information. A lawyer-2 switch, a layer-3 switch, or a router etc., which are used for the normal Ethernet (registered trademark), may be used for the switching unit. Moreover, the switching unit may have the configuration described below in order to reduce the number of linens.

The restoration unit 0150 restores the packet sorted by the switching unit to the non-packet serial digital signal. Specifically, with reference to ID included in the header of the packet, data is assembled in the order of the ID, thereby restoring the packet to the non-packet serial digital signal. Note that a buffer for storing the packet, or means for controlling assembly of received packet may be comprised. Thus, the restored non-packet serial digital signal is outputted from the output port.
Note that the non-packet serial digital signal restored and outputted from the output port may be the identical with the non-packet serial digital signal inputted to the input port, or may be the non-packet serial digital signal, in which additional information signal is added to the non-packet serial digital signal upon the inputting. Therefore, in restoring the packet, generally, although the header information added upon packetizing is discarded, and the non-packet signal with no change from the inputting is restored, the additional Information signal may be added to the head or end of the non-packet signal based on the header information. The additional information signal is a signal indicating information regarding from which input port the signal has been inputted. The input port identification information is correlated with the header information of the packet in this embodiment, so that information indicating the input port used for inputting the non-packet signal may be added in the restoration unit based on the input port identification information.

In addition, in the video switching system of this embodiment, the 'control unit' may be comprised as an optional component. The control unit carries out integral management of the input port identification information, of the output port identification information, and of control information of input/output switching. The term 'management of the input port identification information' means addition, variation, or deletion of the identification information to be given to the input port. The term 'management of the output port identification information' means addition, variation, or deletion of the identification information to be given to the output port. The term 'management of input/output switching control information' means management of information for controlling the switching process in the switching unit. For example, control information, indicating to which output port the packet storing predetermined input port identification information is outputted, is manages. If switching process is carried out, this input/output switching control information, stored in a memory in the switching unit, is varied, thereby implementing switching process. The detailed description will be later provided.
The control unit 'integrally' carries out the above managements. By the integral management, it is possible to promptly carry out the switching process, in which the non-packet signal inputted from an arbitrary input port is outputted from an arbitrary output port. Note that the control unit may be connected with each component via a leased line, or may be connected with each component via a shared network by means of Ethernet (registered trademark).

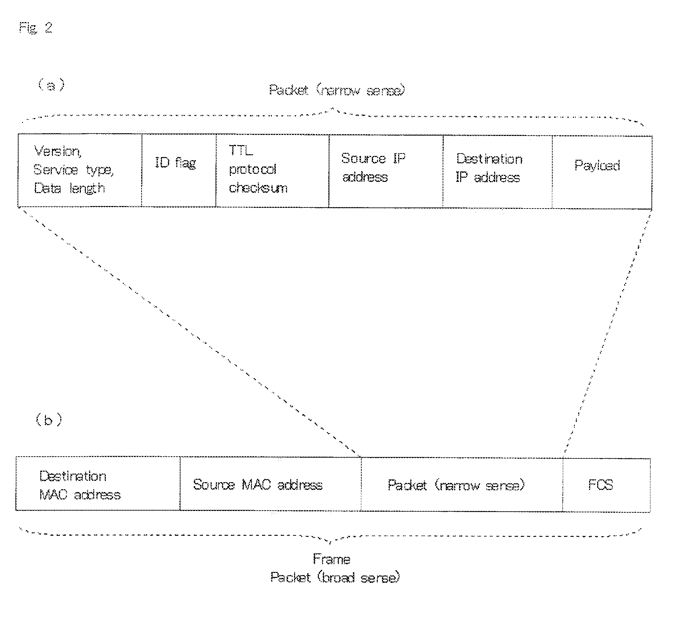

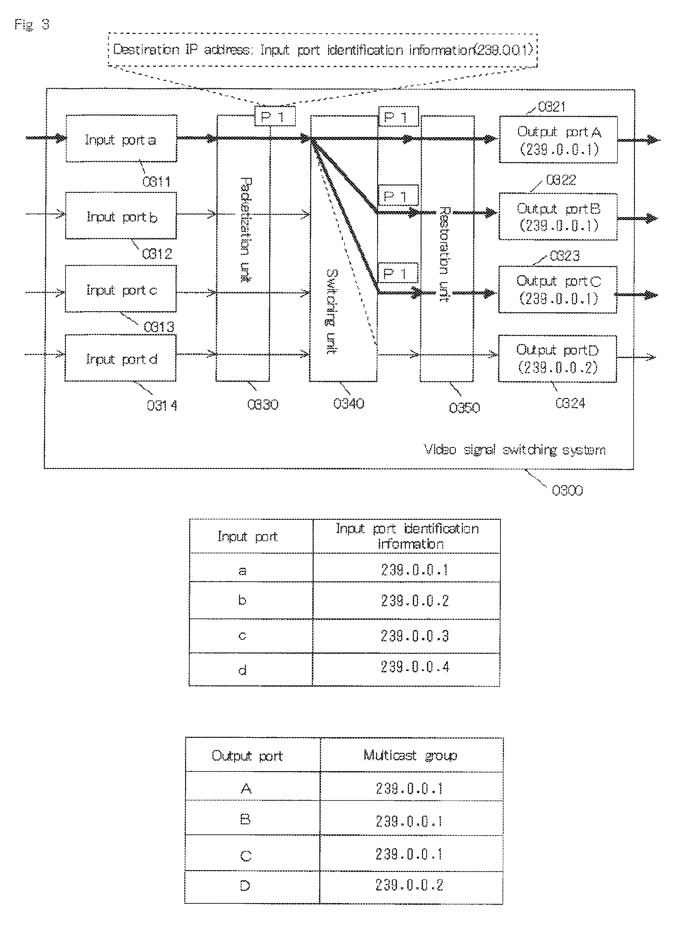

Hereinbelow, detailed description of the packetization by correlating with the input port identification information will be provided. In the Ethernet (registered trademark), which is normally used in networks, IP packet or a frame, in which the MAC address is added to the IP packet, is used. Fig, 2 is a diagram showing a configuration of a packet. The IP packet as shown in Fig. 2(a) is configured by payload as data body, source IP address, destination IP address, and IP header including IP version, service type, data length, and ID etc. In cases where, transmission is carried out by means of the above IP, as shown in Fig. 2(b), a frame with the destination IP address etc. is generated and transmitted. Note that in this embodiment, the frame in Fig. 2(b) is includes in a concept of the 'packet'. The switching unit is the same as a switch used in the normal Ethernet registered trademark), and only the packet, having the address of the output destination as a destination address, can pass through. Although an example, in which a logical IP address is used, is described hereinbelow, the actual switching process is carried out with reference to physical MAC address as in the normal Ethernet (registered trademark).
In this embodiment, it is preferable that a multicast address is used as a type of IP address. The multicast is transmission of the same data to a plurality of parties on the network. The description is provided with reference to Fig. 3. At the outset, the multicast address is given to each output port of the same group. In an aspect of this embodiment, the information in multicast address format is utilized as the input port identification information. For example, assuming that an input port a has information in multicast address format '239.0.0.1' as the input port identification information, the non-packet serial digital signal, acquired by the input port a, is packetized after being correlated with the input port identification information '239.0.0.1' as a destination IP address. Then, the packetized packet P1 is sorted by the switching unit. The switching unit checks the destination IP address, and sorts the packet to the output port in the multicast group indicated by '239.0,0.1'. In Fig. 3, the same packet PI is transmitted to output ports A, B, and C. Meanwhile, the packet P 1 is not transmitted to an output port D, which does not belong to the group indicated by '239.0.0.1'. Thus, by correlating the information in multicast address format as the input port identification information with the packet, it is possible to implement the switching process for a desired output port. In addition, in the case of switching video signal, therefore, in the case of switching the input port, the multicast group, to which each output port belongs, can be changed. For example, in the output port B, when the non-packet serial digital signal inputted from the input port b is outputted, the output port B is set to the muilticast group '239.0.0.2'. The change of multicast can be carried out by means of generally-used protocol such as IGMP (Internet Group Management Protocol). Thus, by utilizing multicast, it is possible to freely carry out switching.
Note that, although the multicast is utilized in the above case of Fig. 3, unicast or broadcast may be utilized. Moreover, not indicated in drawings, the control unit, which has been described, may be used for change of multicast group, of IP address, or detection of information regarding interruption.
In addition, in this embodiment, the packetization is carried out after being correlated with the 'input port identification information'. This includes that the packetization is carried out a after being correlated with the 'output port identification information'. The reason for this is that, as shown in Fig. 3, the switching, which is carried out by utilizing the destination IP address, is equal in appearance to the packetization, which is carried out after being correlated with the 'output port identification information'.

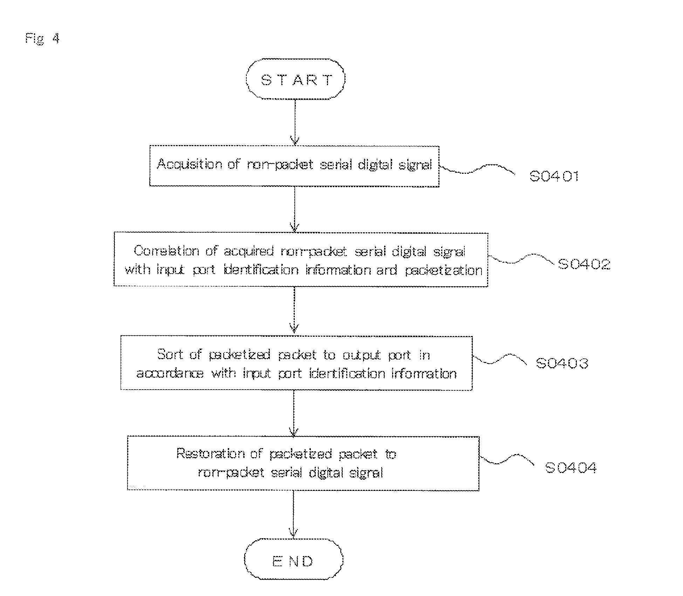

Fig. 4 is a flowchart of the embodiment. The processes in the video signal switching system of this embodiment comprises the following steps. At the outset, the non-packet serial digital signal is acquired (S0401). Subsequently, the non-packet serial digital signal acquired in S0401 is packetized after being correlated with the input port identification information of the input port, which has acquired the non-packet serial digital signal, thereby generating a packet (S0402). Subsequently, the packet, which has been packetized in S0402, is sorted to the output port in accordance with the input port identification information correlated with the packet (S0403). Subsequently, the packet, which has been sorted in S0403, is restored to the non-packet serial digital signal.

In this embodiment, the non-packet serial digital signal is packetized, so that it is possible to carry out the switching by utilizing the existing network components, thereby significantly reducing the costs. Moreover, by packetization, it is possible to implement an efficient switching process.

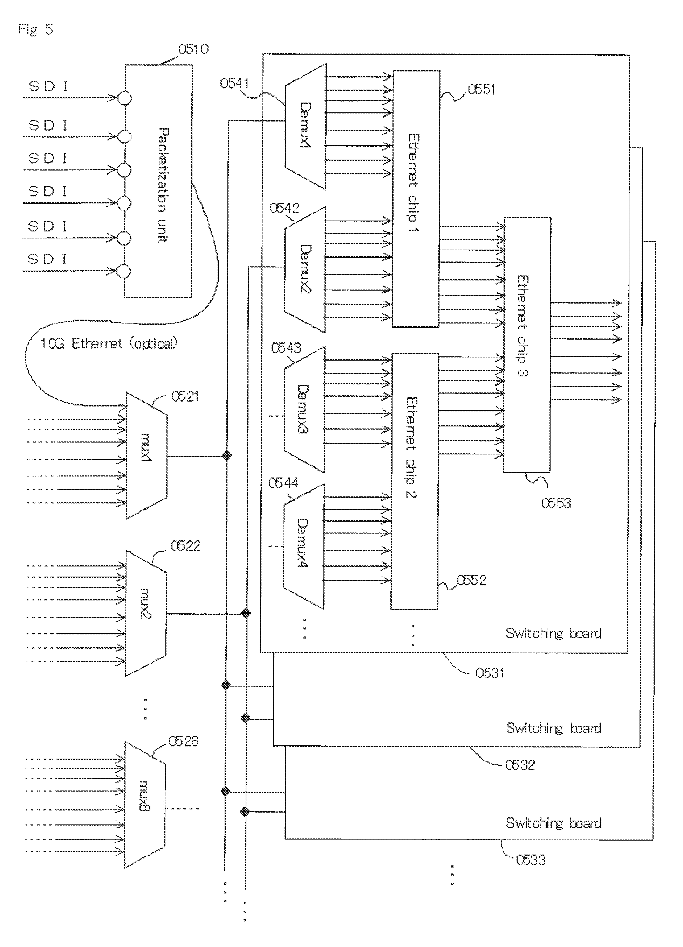

Fig. 5 is a diagram showing a concrete configuration of a switching unit. Note that, in Fig. 5, the packetizalion unit 0510 is partially indicated in order to describe the switching unit. At the outset, six SDI signal lines are introduced to the packetization unit 0510, thereby carrying out paketization, and respective packets are appropriately outputted to the switching units via one optical cable. Hereat, the destination IP address of each packet is multicast IP address corresponding to a physical position of the input port on the case, and the destination MAC address is multicast MAC address corresponding to the IP address, By this addressing, the input port identification information is correlated with the packet. An example of the transmission includes a transmission by means of 10Gbit Ethernet. By this packetization, it is possible to reduce a physical transmission path, thereby implementing a simple configuration. Subsequently, these eight optical cables are multiplexed by multiplexer Mux0521-0528. For the multiplexing, Wavelength Division Multiplexing (WDM), which is generally used, can be utilized. The 'Wavelength Division Multiplexing' is, for example, applied to a communication by means of optical fibers. In the Wavelength Division Multiplexing, it is possible to simultaneously multiplex and use a plurality of optical signals having different wave lengths, thereby dramatically increasing transmission quantity of information on the optical fiber. DWDM (Dense WDM) is densified WDM. By the above optical multiplexing, it is possible to reduce the number of cables connected to a board for switching process, thereby simplifying the configuration. As a concrete example, a configuration having eight Multiplexers (Mux) is cited. Thus, the optical-multiplexed packet is outputted to a switching board for output to each output port. As an example, the switching unit is configured by eight switching boards. Subsequently, the optical-multiplexed packet is outputted to each switching board via a splitter, In the switching board, the optical-multiplexed packet is demultiplexed by demultiplexers (Demux) 0541-0544, Subsequently, for example, based on the destination MAC address, the Ethernet (registered trademark) chips 0551-0553 carry out processing to pass the packet through the output port, or to delete the packet. As described above, the destination MAC address of the packet is the multicast address corresponding to the destination IP address, and the IP address of the packet is the multicast address corresponding to the physical position of the input port, so that the processing to pass the packet through the output port or to delete the packet by the Ethernet (registered trademark) chips 0551-0553 based on the destination MAC address is equal to the processing based on the IP address. Note that in cases where the Ethernet (registered trademark) chips 0551-0553 have switching function by utilizing layer-3 IP address, it is possible to directly carry out processing based on the destination IP address. According to this configuration of the input port, it is possible to simplify the physical configuration of the video signal switching system for carrying out switching of a plurality of non-packet signals.

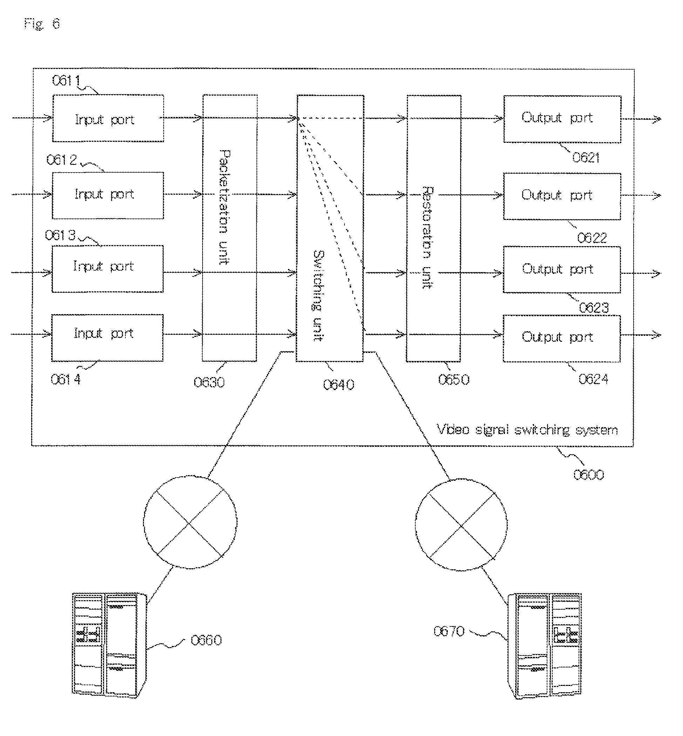

Fig. 6 is a diagram showing an extended example of the embodiment. Similar to the video signal switching system as shown in Fig. 1, the video signal switching system 0600 as shown in Fig. 6 comprises a plurality of 'input ports' (0611-0614), a plurality of 'output ports' (0621-0624), a 'packetization unit' (0630), a 'switching unit' (0640), and a 'restoration unit' (0650). In addition, in Fig. 6, the switching unit 0640 is connected to the external network. In the video signal switching system, the switching process is carried out by utilizing the normal Ethernet (registered trademark) after packetization. Hereat, for example, it is possible to establish connections with computer terminals 0660 and 0670, which are connected with the external network. According to this configuration, for example, it is possible to easily send instructions to the control unit controlling the video signal switching system 0600 from the computer terminal 0660 at a remote location via the existing network. Note that in the case of mutual connection between different networks, it is possible to utilize NAT (Network Address Translation) etc.

## Claims

1. A video signals switching system, comprising;
a plurality of input ports for acquiring a non-packet serial digital signal;
a plurality of output ports for outputting said non-packet serial digital signals;
a packetization unit, which packetizes the acquired non-packet serial digital signal after being correlated with input port identification information of the input port, which has acquired the non-packet serial digital signal, thereby generating a packet;
a switching unit, which sorts the packetized packet to the output port in accordance with the input port identification information correlated with the packet; and
a restoration unit, which restores the packet sorted by the switching unit to the non-packet serial digital signals.

2. The video signal switching system according to Claim 1, comprising:
a control unit, which carries out integral management of the input port identification information, of the output port identification information, and of control information of input/output switching.

3. An operation method for video signal switching system, which comprises a plurality of input ports, which is for acquiring non-packet serial digital signal, and a plurality of output ports, which is for outputting said non-packet serial digital signal, the method comprising:
a packetizing step, which packetizes the acquired non-packet serial digital signal after being correlated with input port identification information of the input port, which has acquired the non-packet serial digital signal, and generates a packet;
a switching step, which sorts the packetized packet to the output port in accordance with the input port identification information cot-related with the packet; and
a restoring step, which restores the packet sorted by the switching unit to the non-packet serial digital signal.
